# EUROPEAN PATENT APPLICATION

(11) **EP 4 447 285 A1**
(43) Date of publication of application: **16.10.2024**
(21) Application number: 22905685.8
(22) Date of filing: 03.03.2022
(51) Int. Cl.: H02K 3/50, H02K 1/12, H02K 5/24, H02K 9/22

(54) **MOTOR, POWER ASSEMBLY, AND POWER-ASSISTED BICYCLE**

(30) Priority: 16.12.2021 CN 202111545128; 16.12.2021 CN 202123204217 U
(71) Applicant: Guangdong Welling Motor Manufacturing Co., Ltd., Foshan, Guangdong 528311 (CN); Welling (Wuhu) Motor Manufacturing Co., Ltd., Wuhu, Anhui 241009 (CN)
(72) Inventor: ZUO, Yajun, Foshan, Guangdong 528311 (CN); ZHOU, Qianyun, Foshan, Guangdong 528311 (CN); LIU, Hailiang, Foshan, Guangdong 528311 (CN); WANG, Hongxiao, Foshan, Guangdong 528311 (CN)
(74) Representative: RGTH
(86) International application number: PCT/CN2022/079089
(87) International publication number: WO 2023/108914

(57) **Abstract**

Disclosed are a motor, a power assembly, and a power-assisted bicycle, where the motor includes a housing (300), a stator assembly (200), and a busbar assembly (100). The housing (300) is internally formed with a cavity, and is provided with a wire passing hole (320). The stator assembly (200) is disposed in the cavity and interference-connected to an inner wall of the housing (300). The busbar assembly (100) is mounted at one end of the stator assembly (200) in an axial direction, and is provided with a three-phase connection terminal (150) penetrating through the wire passing hole (320). A resin material (310) is filled between the stator assembly (200) and the housing (300). The busbar assembly (100) is further provided with a boss base (170) mounted in the wire passing hole (320) in a sealing manner. The three-phase connection terminal (150) is mounted on the boss base (170).

## Description

### CROSS-REFERENCES TO RELATED APPLICATIONS

The present application claims the priority to Chinese Patent Application No.202111545128.2, titled "Motor, Power Assembly, and Power-Assisted Bicycle", filed on December 16, 2021, and Chinese Patent Application No.202123204217.9, titled "Motor, Power Assembly, and Power-Assisted Bicycle", filed on December 16, 2021, the entire contents of which are herein incorporated by reference.

### TECHNICAL FIELD

The present disclosure relates to the technical field of motors, and in particular to a motor, a power assembly, and a power-assisted bicycle.

### BACKGROUND

In the related art, a power assembly mainly comprises a motor and a transmission mechanism. A stator assembly is mounted in a housing of the motor. Insufficient stiffness of the stator assembly will cause large vibration noise, and heat is conducted between a stator winding of the stator assembly and the housing of the motor through air. However, due to the relatively small thermal conductivity of the air, the heat dissipation performance of the motor is relatively poor, which reduces the performance efficiency of the motor, thereby worsening the output efficiency of the power assembly.

### SUMMARY

The present disclosure aims to solve at least one of the technical problems existing in the related art. To this end, the present disclosure proposes a motor that can reduce vibration noise and improve heat dissipation performance.

The present disclosure further provides a power assembly having the above motor.

The present disclosure further provides a power-assisted bicycle having the above power assembly.

A motor according to an embodiment of the first aspect of the present disclosure comprises:
a housing internally formed with a cavity and provided with a wire passing hole communicated to the cavity;
a stator assembly disposed in the cavity and interference-connected to an inner wall of the housing; and
a busbar assembly disposed in the cavity and mounted at one end of the stator assembly in an axial direction, and provided with a three-phase connection terminal that penetrates through the wire passing hole to be connected to a power supply,
where a resin material is filled between the stator assembly and the housing, the busbar assembly is further provided with a boss base mounted in the wire passing hole in a sealing manner, and the three-phase connection terminal is mounted on the boss base.

The motor according to the embodiment of the first aspect of the present disclosure has at least the following beneficial effects.

By filling the resin material between the stator assembly and the housing, the stiffness of the stator assembly can be greatly improved after solidification of the resin material, which prevents the stator assembly from shaking easily, thereby effectively reducing vibration noise of the stator assembly; because the thermal conductivity of the resin material is much higher than that of air, the heat of the stator assembly and other heat inside the motor can be quickly transferred to the housing through the resin material, and then dissipated to the outside through the housing, thereby greatly improving the heat dissipation performance of the motor and preventing the reduction of the efficiency of the motor due to excessive temperature; and meanwhile, the wire passing hole of the housing can be sealed through the boss base to prevent the resin material from seeping out.

According to some embodiments of the present disclosure, the resin material is a thermosetting resin material.

According to some embodiments of the present disclosure, the busbar assembly comprises:
an annular support frame;
a first bus bar provided with a first main body portion embedded in the annular support frame, where the first main body portion extends in a circumferential direction of the annular support frame and has a first opening;
a second bus bar provided with a second main body portion embedded in the annular support frame, where the second main body portion extends in the circumferential direction of the annular support frame and has a second opening; and
a third bus bar provided with a third main body portion and a fourth main body portion that are embedded in the annular support frame and are electrically connected, where a clearance is provided between the fourth main body portion and the third main body portion in an axial direction of the annular support frame,
where the first main body portion and the second main body portion are spaced apart in the axial direction of the annular support frame, the first opening and the second opening are staggered in the circumferential direction of the annular support frame, the third main body portion is located at the first opening, and the fourth main body portion is located at the second opening.

According to some embodiments of the present disclosure, a height of the clearance in the axial direction of the annular support frame is h, where h satisfies: h is greater than or equal to 0.3 mm.

According to some embodiments of the present disclosure, the third bus bar is further provided with a bending portion, and one end of the bending portion is connected to the third main body portion and the other end of the bending portion is connected to the fourth main body portion.

According to some embodiments of the present disclosure, the bending portion, the third main body portion and the fourth main body portion are integrally formed.

According to some embodiments of the present disclosure, the stator assembly comprises a plurality of segmented stator cores, and segmented stator windings wound respectively around the segmented stator cores.

According to some embodiments of the present disclosure, at least two of the segmented stator windings between adjacent slots of in-phase windings are single-wire series windings.

According to some embodiments of the present disclosure, a cross-section of a winding wire of the segmented stator winding is square or waist-circular.

According to some embodiments of the present disclosure, a number of poles of the motor is 2p, a number of slots is Z, and the number of poles and the number of slots satisfy: | Z-2p | = 2.

A power assembly according to an embodiment of the second aspect of the present disclosure comprises the motor of the embodiment of the first aspect of the present disclosure.

The power assembly according to the embodiment of the second aspect of the present disclosure has at least the following beneficial effects.

Since the power assembly adopts the above motor, by filling the resin material between the stator assembly and the housing, the motor can effectively improve the stiffness of the stator assembly and reduce the vibration noise of the power assembly, and can also effectively improve the heat dissipation performance of the motor to prevent the reduction of the efficiency of the motor due to excessive temperature, which is beneficial to improving the output efficiency of the power assembly.

A power-assisted bicycle according to an embodiment of the third aspect of the present disclosure comprises the power assembly of the embodiment of the second aspect of the present disclosure.

The power-assisted bicycle according to the embodiment of the third aspect of the present disclosure has at least the following beneficial effect:
By adopting the above power assembly, the performance of the power-assisted bicycle is beneficially improved.

Additional aspects and advantages of the present disclosure will be set forth in part in the description which follows, and in part will be obvious from the description, or can be learned by practice of the present disclosure.

### BRIEF DESCRIPTION OF DRAWINGS

FIG. 1 is a schematic three-dimensional structural diagram of a power assembly according to some embodiments of the present disclosure;
FIG. 2 is a schematic cross-sectional view along a line A-A of FIG. 1;
FIG. 3 is a schematic partial structural diagram of a power assembly according to some embodiments of the present disclosure;
FIG. 4 is a schematic three-dimensional structural diagram of a busbar assembly according to some embodiments of the present disclosure;
FIG. 5 is a schematic top view of the busbar assembly of FIG. 4;
FIG. 6 is a schematic cross-sectional view along B-B of FIG. 5;
FIG. 7 is an enlarged view of C in FIG. 6;
FIG. 8 is a schematic assembly diagram of a bus bar according to some embodiments of the present disclosure;
FIG. 9 is a schematic three-dimensional structural diagram of a third bus bar according to some embodiments of the present disclosure;
FIG. 10 is a schematic three-dimensional structural diagram of a stator assembly according to some embodiments of the present disclosure;
FIG. 11 is an exploded schematic diagram of a stator assembly according to some embodiments of the present disclosure;
FIG. 12 is a schematic structural diagram of segmented stator cores adopting separate windings;
FIG. 13 is an exploded schematic diagram of a stator assembly according to some other embodiments of the present disclosure; and
FIG. 14 is a schematic structural diagram of two segmented stator cores within-phase adjacent slots adopting series windings.

### Reference numerals:

busbar assembly 100, first bus bar 110, first main body portion 111, first connection portion 112, first opening 113, second bus bar 120, second main body portion 121, second connection portion 122, second opening 123, third bus bar 130, third main body portion 131, fourth main body portion 132, bending portion 133, third connection portion 134, clearance 135, annular support frame 140, insulating layer 141, three-phase connection terminal 150, clamping terminal 160, boss base170;
stator assembly 200, segmented stator core 210, segmented stator winding 220, terminal 221;
housing 300, resin material 310, wire passing hole 320;
transmission mechanism 400;
rotor assembly 500.

### DETAILED DESCRIPTION

Embodiments of the present disclosure are described in detail below, examples of which are illustrated in the accompanying drawings. The same or similar reference numerals throughout represent the same or similar elements or elements with the same or similar functions. The embodiments described below with reference to the accompanying drawings are exemplary and are only used to explain the present disclosure and are not to be understood as limitations of the present disclosure.

In the description of the present disclosure, it should be understood that the orientation descriptions referred to, for example, the orientations or positional relationships indicated by upper, lower, front, rear, left, right, etc., are based on the orientations or positional relationships shown in the drawings and are only for convenience of describing the present disclosure and simplifying the description, rather than indicating or implying that the referred device or element must have a specific orientation, be constructed and operated in a specific orientation, and thus should not be construed as limiting the present disclosure.

In the description of the present disclosure, the term "several" means one or more, the term "plural" means two or more, the terms "greater than, less than, more than, etc." are understood to exclude the original number, and the terms "above, below, within, etc." are understood to comprise the original number. If there is a description of "first" and "second", it is only for the purpose of distinguishing technical features, and cannot be understood as indicating or implying the relative importance or implicitly indicating the number of indicated technical features or implicitly indicating the sequential relationship of indicated technical features.

In the description of the present disclosure, unless otherwise expressly limited, words such as setting, installation, connection, assembly, and cooperation should be understood in a broad sense. Those skilled in the art can reasonably determine the specific meaning of the above words in the present disclosure in combination with the specific content of the technical scheme.

In the related art, the power assembly mainly comprises a motor and a transmission assembly. A stator assembly is mounted in a housing of the motor. Insufficient stiffness of the stator assembly will cause large vibration noise, and heat is conducted between a stator winding of the stator assembly and the housing of the motor through air. However, due to the relatively small thermal conductivity of the air, the heat dissipation performance of the motor is relatively poor, which reduces the performance efficiency of the motor, thereby worsening the output efficiency of the power assembly.

In order to solve at least one of the above technical problems, the present disclosure proposes a motor that can reduce vibration noise and improve heat dissipation performance.

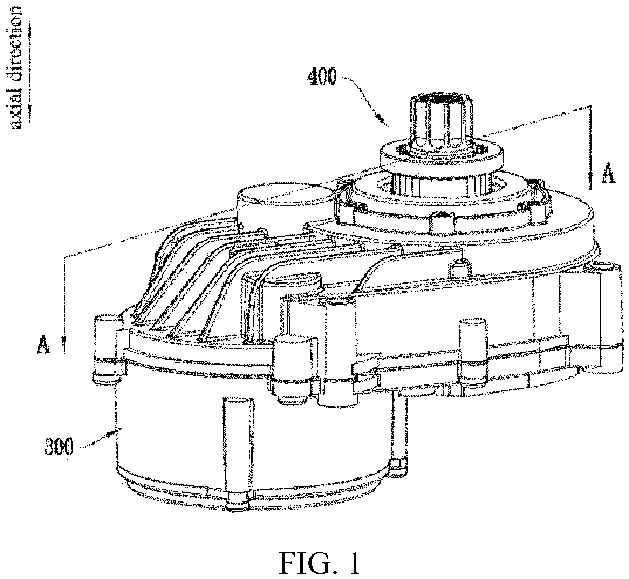

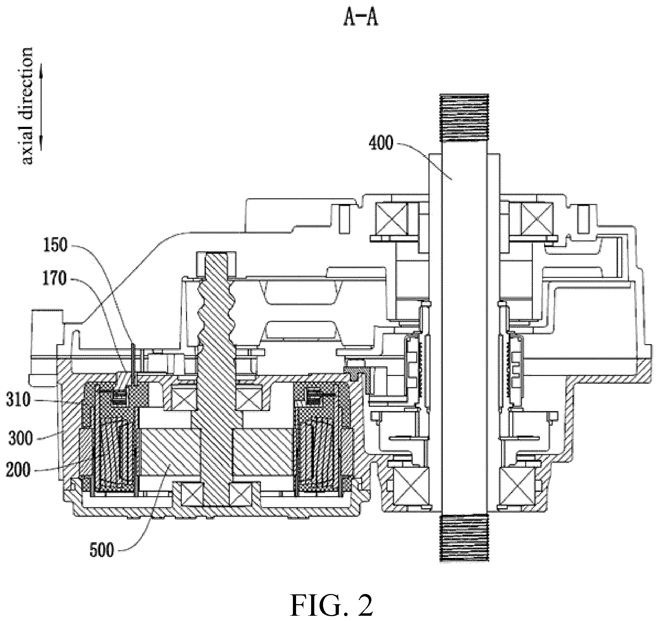

Referring to FIGs. 1 and 2, a motor provided by an embodiment of the first aspect of the present disclosure comprises a stator assembly 200, a rotor module 500, and a housing 300. The housing 300 is internally formed with a cavity. The stator assembly 200 is disposed in the cavity and is interference-connected to an inner wall of the housing 300. The rotor module500 is rotatably mounted in the middle of the stator assembly 200.

When the motor is in operation, windings of the stator assembly 200 are powered on to generate a rotating magnetic field. The magnetic field acts on the rotor module500 to cause the rotor module500 to rotate relative to the stator assembly 200. When the stiffness of the stator assembly 200 is insufficient, larger vibration noise will easily be generated.

Referring to FIG. 2, to this end, in the embodiment of the present disclosure, a resin material 310 is filled between the housing 300 and the stator assembly 200, so that a clearance between the housing 300 and the stator assembly 200 is filled with the resin material 310, and the stiffness of the stator assembly200 can be greatly improved after solidification of the resin material 310, which prevents the stator assembly 200 from shaking easily, thereby effectively reducing vibration noise of the stator assembly.

In addition, the thermal conductivity of the resin material 310 may usually reach more than 0.2V" (mK), while the thermal conductivity of air at normal temperature is only 0.0267V" (mK). It can be seen that the thermal conductivity of the resin material 310 is much higher than that of the air, so that the heat of the stator assembly 200 and other heat inside the motor can be quickly transferred to the housing 300 through the resin material 310, and then dissipated to the outside through the housing 300, thereby greatly improving the heat dissipation performance of the motor to prevent the reduction of the efficiency of the motor due to excessive temperature.

It can be understood that the resin material 310 is a polymer resin material. For specific applications, a thermosetting resin material may be selected. The thermosetting resin material can better improve the stiffness of the stator assembly 200 and the thermal conductivity of the motor. Certainly, other types of resin materials may also be selected, and the present disclosure is not limited thereto.

Referring to FIG. 2, the motor further comprises a busbar assembly 100. The busbar assembly 100 is disposed in the cavity and is mounted at one end of the stator assembly 200 in an axial direction. The busbar assembly 100 and the stator assembly 200 form a stator assembly.

The busbar assembly 100 may be provided with a structure such as a clamping terminal 160, so that the busbar assembly 100 can be clamped at an end of the stator assembly 200 through the clamping terminal 160, which facilitates mounting and disassembling.

Referring to FIG. 2, the busbar assembly 100 is provided with a three-phase connection terminal 150, one end of the three-phase connection terminal 150 is connected to a power supply, and the other end is connected to the winding of the stator assembly 200 to supply power to the winding. An outer wall of the housing 300 is provided with a wire passing hole 320, and the wire passing hole 320 is communicated to the cavity, so that the three-phase connection terminal 150 can pass through the wire passing hole 320 to be conveniently connected to the power supply located outside the housing 300.

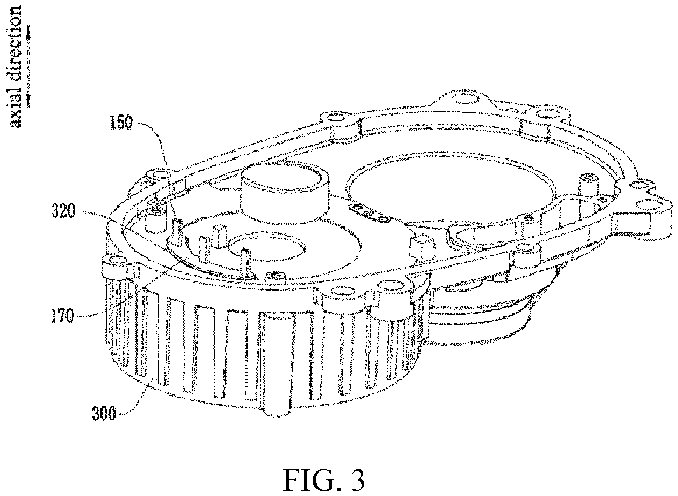

Referring to FIGs. 2 and 3, it should be noted that when the resin material 310 is poured into the housing 300, part of the resin material 310 may seep out from a clearance between the three-phase connection terminal 150 and an inner wall of the wire passing hole 320, which causes waste of the resin material 310 and impact on other components.

To this end, in some embodiments of the present disclosure, the busbar assembly 100 is further provided with a boss base, the three-phase connection terminal 150 is mounted on the boss base 170, and the bottom of the boss base 170 is matched with the wire passing hole 320 in shape, so that the boss base 170 can seal the wire passing hole 320 to prevent the resin material 310 from seeping out from the wire passing hole 320. Meanwhile, the boss base 170 can well fix the three-phase connection terminal 150, which is beneficial to the positioning of the three-phase connection terminal 150 and facilitates the plug-in installation of the three-phase connection terminal 150 and an electric control board.

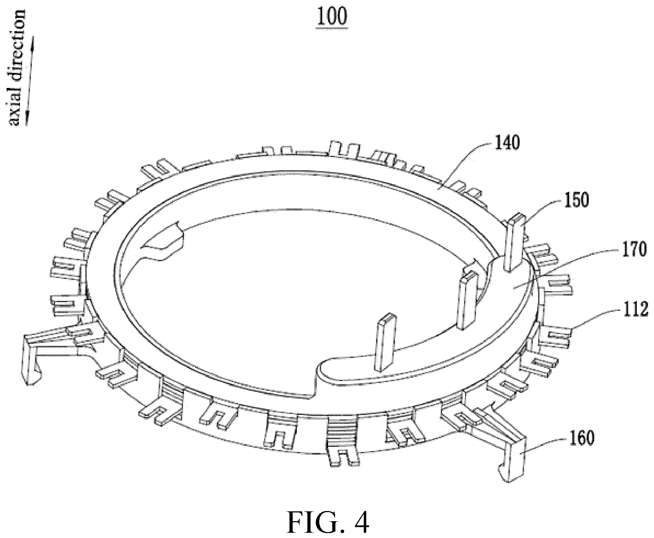

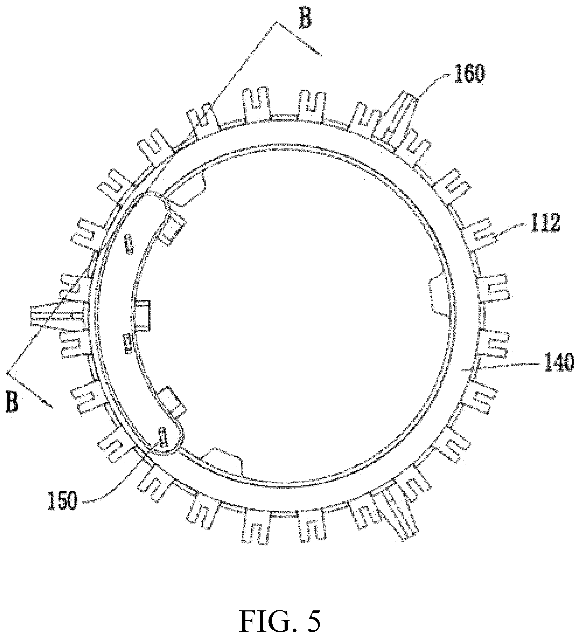

Referring to FIGs. 4 to 8, the busbar assembly 100 comprises an annular support frame 140, a first bus bar 110, a second bus bar 120, and a third bus bar 130. The annular support frame 140 is made of an insulating material and can fixedly support the first bus bar 110, the second bus bar 120 and the third bus bar 130 and isolate adjacent bus bars. The first bus bar 110, the second bus bar 120, and the third bus bar 130 are all made of copper bars or other materials with high conductivity and can function as a bus. The boss base is located at the upper end of the annular support frame 140, and the three-phase connection terminal 150 is mounted on the boss base. The three-phase connection terminal 150 has three connection terminals. One end of each of the three connection terminals is connected to one of three bus bars in a one-to-one correspondence manner. The other end of each of the three connection terminals is connected to the power supply to supply power to the three-phase winding.

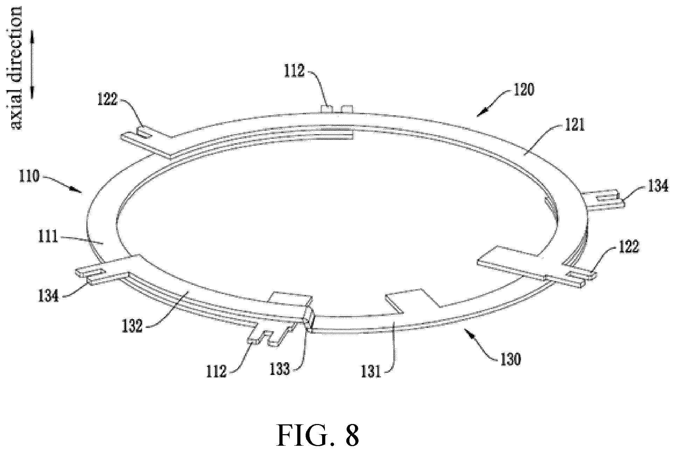

Referring to FIG. 8, the first bus bar 110 is of a flat plate structure, and comprises a first main body portion 111 and a first connection portion 112. The first main body portion 111 is embedded in the annular support frame 140 and extends in a circumferential direction of the annular support frame 140, so that the first main body portion 111 is generally of a semi-circular ring structure, and in this way, a first opening 113 is formed between both ends of the first body portion 111 in the circumferential direction. The first connection portion 112 is connected to the outer peripheral wall of the first main body portion 111. The first connection portion 112 is used to connect terminals 221 of part of windings of a motor stator that need to be connected together, and the part of the terminals 221 are electrically connected through the first main body portion 111, thereby achieving the function of the bus.

Referring to FIG. 8, the structure of the second bus bar 120 may be the same as or similar to that of the first bus bar 110. The second bus bar comprises a second main body portion 121 and a second connection portion 122. The second main body portion 121 is embedded in the annular support frame 140 and extends in the circumferential direction of the annular support frame 140, so that the second main body portion 121 is generally of a semi-circular ring structure, and in this way, a second opening 123 is formed between both ends of the second main body portion 121 in the circumferential direction. The second connection portion 122 is connected to the outer peripheral wall of the second main body portion 121. The second connection portion 122 is used to connect the terminals 221 of another part of windings of the motor stator that need to be connected together, and another part of the terminals 221 are electrically connected through the second main body portion 121, thereby achieving the function of the bus.

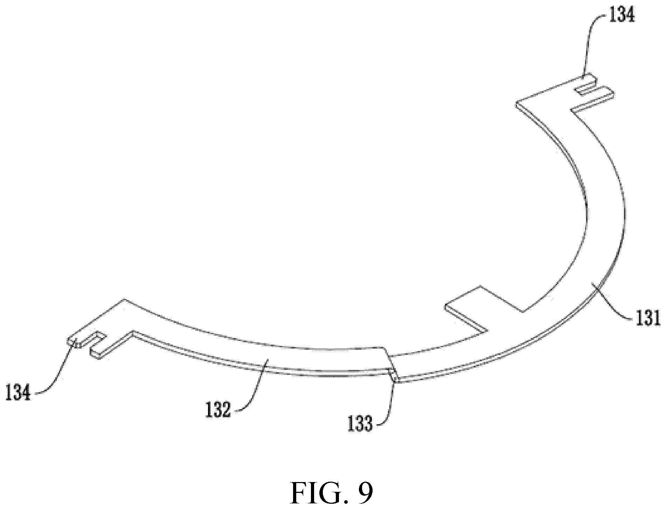

Referring to FIGs. 8 and 9, the third bus bar 130 comprises a third main body portion 131, a fourth main body portion 132, and at least one third connection portion 134 which are electrically connected. The third main body portion 131 and the fourth main body portion 132 are disposed in the circumferential direction of the annular support frame 140 and are embedded in the annular support frame 140, and a clearance 135 is formed between the third main body portion 131 and the fourth main body portion 132 in the axial direction of the annular support frame 140, so that the third bus bar 130 can span between bus bars on different layers. A plurality of third connection portions 134 may be provided, one of the third connection portions 134 is connected to the outer peripheral wall of the third main body portion 131, another one of the third connection portions 134 is connected to the outer peripheral wall of the fourth main body portion 132; the third connection portion 134 is used to connect terminals 221 of another part of the windings of the motor stator that need to be connected together, and the another part of terminals 221 are electrically connected through the third main body portion 131 and the fourth main body portion 132, thereby achieving the function of the bus.

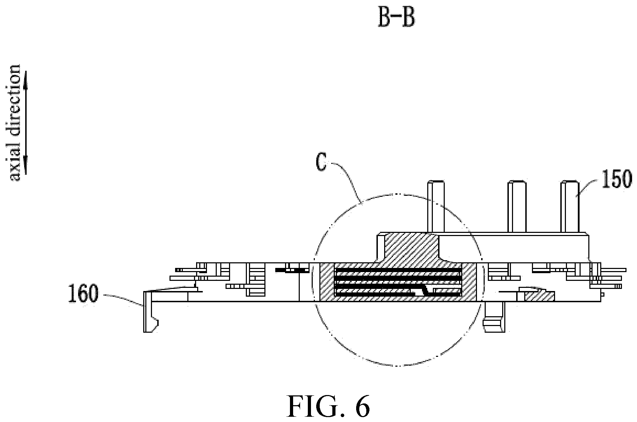

Referring to FIGs. 6 to 8, the first bus bar 110 and the second bus bar 120 are spaced apart in the axial direction of the annular support frame 140, and meanwhile, rotationally staggered in the circumferential direction of the annular support frame 140, so that the first opening 113 and the second opening 123 are staggered in the circumferential direction of the annular support frame 140. The third main body portion 131 is disposed in the first opening 113, and the fourth main body portion 132 is disposed in the second opening 123, that is, the third main body portion 131 and the first main body portion 111 are located on the same layer, and the fourth main body portion 132 and the second main body portion 121 are located on the same layer, so that the third bus bar 130 can make full use of the idle space between the first bus bar 110 and the second bus bar 120, thereby decreasing the total number of layers of bus bars. Since the bus bars of adjacent layers are isolated by the insulating layer 141 formed by the annular support frame 140, every time one layer of busbars decreases, the busbar assembly 100 also decreases one insulating layer 141 at the same time, so that the axial height of the busbar assembly 100 can be effectively reduced.

It can be understood that the third bus bar 130 may also be provided with a plurality of fourth main body portions 132 as needed. The plurality of fourth main body portions 132 are spaced apart in the axial direction of the annular support frame 140 and are staggered in the circumferential direction of the annular support frame 140, so that each fourth main body portion 132 may be disposed at the opening of the corresponding bus bar, the third bus bar 130 can span more layers of bus bars, which makes full use of the idle space of other bus bars, thereby reducing the axial dimension of the busbar assembly 100.

Bus bars are needed to be used for bridge connection between the in-phase windings of the three-phase windings. However, the existing bus bars for the in-phase bridge connection of the three-phase windings usually adopt copper bars with a straight structure, that is, the above first or second bus bar 120 is adopted, and in this way, three layers of copper bars are needed to achieve the bridge connection. However, if the bus bars for bridge connection of a certain phase winding adopts the above third bus bar 130, the bridge connection between the in-phase windings of the three-phase windings may be realized with only two layers of copper bars, thereby reducing the number of layers of the copper bars. Every time the thickness T1 of one layer of copper bars is reduced, the thickness T2 of one insulating layer 141 is reduced, so that the axial height of the busbar assembly 100 can be reduced by T, where T=T1+T2, thereby effectively reducing the height of the stator assembly, making the motor structure more compact, effectively reducing the size of the motor, and improving the compatibility of the motor.

It should be noted that in some embodiments, the number of the first bus bars 110 and the second bus bars 120 may be set to two or more, and the third bus bar 130 may also be set to two or more, thereby reducing more axial height of the busbar assembly 100.

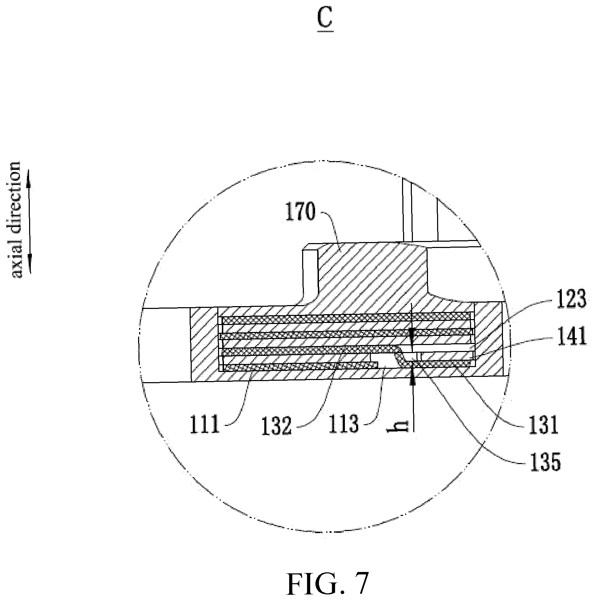

Referring to FIG. 7, it should be noted that the bus bars of adjacent layers are insulated and isolated by the insulating layer 141. In order to achieve better insulation performance between the bus bars of adjacent layers, the thickness of the insulating layer 141 usually needs to be set to be relatively thick. To this end, in some embodiments of the present disclosure, the height of the clearance 135 between the third main body portion 131 and the fourth main body portion 132 in the axial direction of the annular support frame 140 is h, where h satisfies the following relationship: h is greater than or equal to 0.3mm. Therefore, the height of the clearance 135 is high enough. When manufacturing the busbar assembly 100, the insulating layer 141 is formed by injecting the insulating material into the clearance 135. In this way, the insulating layer 141 can be made to have a sufficient thickness, so that the third bus bar 130 and adjacent bus bars have better insulation performance, which is beneficial to improving the insulation and voltage resistance performance of the busbar assembly 100.

Referring to FIGs.8 and 9, it can be understood that the third bus bar 130 is further provided with a bending portion 133, and the bending portion 133 extends in the axial direction of the annular support frame 140, or the bending portion 133 extends in a direction forming an comprised angle with the axial direction of the annular support frame 140, where the comprised angle is no more than 90°, so that the third bus bar 130 is in a Z shape. In this way, the bending portion 133 can extend from the bus bar on the next layer to the bus bar on the upper layer, so that both ends of the bending portion 133 can be respectively connected to the third main body portion 131 and the fourth main body portion 132 that are located on adjacent layers.

It should be noted that the bending portion 133, the third main body portion 131 and the fourth main body portion 132 may be made by integral molding. For example, when manufacturing the third bus bar 130, the bending portion 133, the third main body portion 131, and the fourth main body portion 132 may be integrally formed by stamping a copper plate, so that the connection strength of the bending portion 133, the third main body portion 131, and the fourth main body portion 132 is better, and the processing is more convenient. Certainly, the bending portion 133, the third main body portion 131, and the fourth main body portion 132 may also be manufactured separately, and then the bending portion 133, the third main body portion 131, and the fourth main body portion 132 are connected into a whole by welding or other methods.

It should be noted that the third bus bar 130 may also connect the fourth main body portion 132 and the third main body portion 131 through wires, thereby achieving electrical connection between the fourth main body portion 132 and the third main body portion 131. For example, one end of the copper wire is welded to the fourth main body portion 132 and the other end of the copper wire is welded to the third main body portion 131, thereby electrically connecting the third main body portion 131 and the fourth main body portion 132 that are located on adjacent layers.

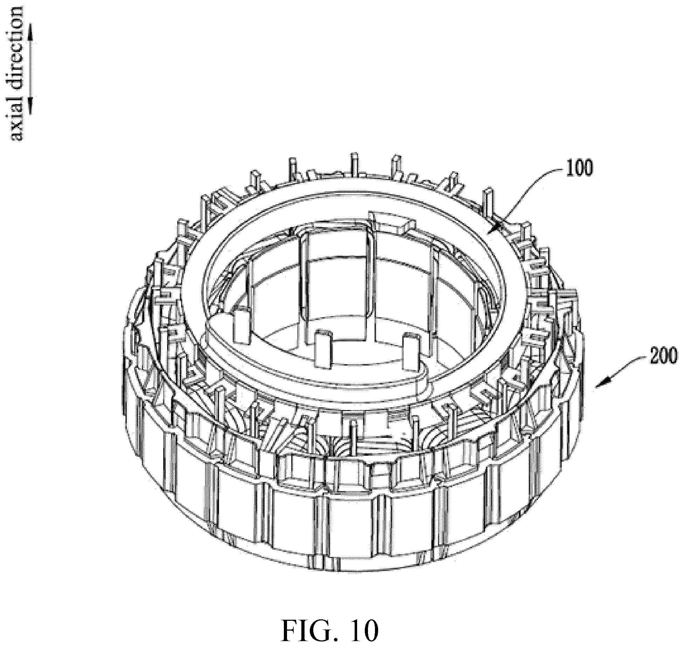

It should be noted that in the related art, the stator assembly 200 usually adopts an integral iron core for winding, and the copper space factor of the winding is relatively low, which affects the improvement of the power density and performance of the motor. To this end, referring to FIGs. 10 to 14, in some embodiments of the present disclosure, the stator assembly 200 comprises a plurality of segmented stator cores 210 and segmented stator windings 220 respectively wound around the corresponding segmented stator cores 210. In the embodiment of the present disclosure, dividing the integral iron core into a plurality of segmented stator cores 210 is beneficial to improving the copper space factor of the winding, and is beneficial to improving the power density and performance of the motor.

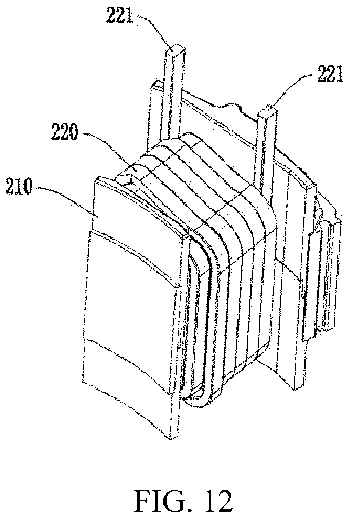

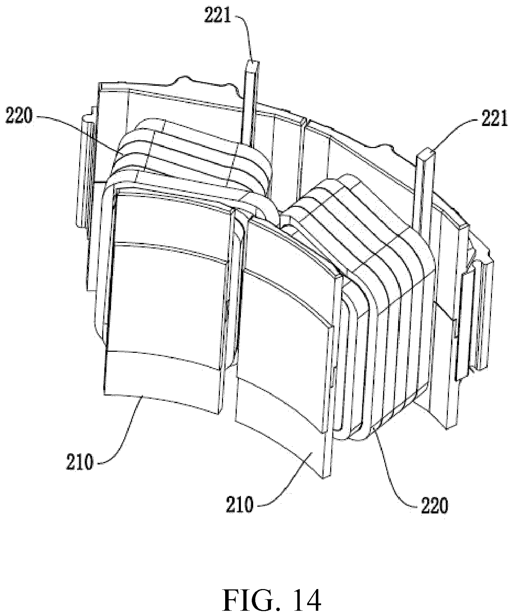

It can be understood that in the related art, the winding wire of the stator winding is usually a round wire. During the winding, a large clearance is formed between the round wires, resulting in a relatively low copper space factor of the winding. When the stator assembly 200 adopts an integral iron core and adopts the round wire for winding, the copper space factor is usually only about 55%. To this end, referring to FIGs. 12 and 14, in some embodiments of the present disclosure, by adopting the segmented stator core 210, wires with a rectangular or square or waist-circular cross-section are adopted for winding, for example, flat wires are adopted for winding, so that the clearance between the winding wires can be greatly reduced, the copper space factor of the winding is increased, and the copper space factor can be increased to about 77%, thereby further improving the power density and the performance of the motor without increasing the size of the motor.

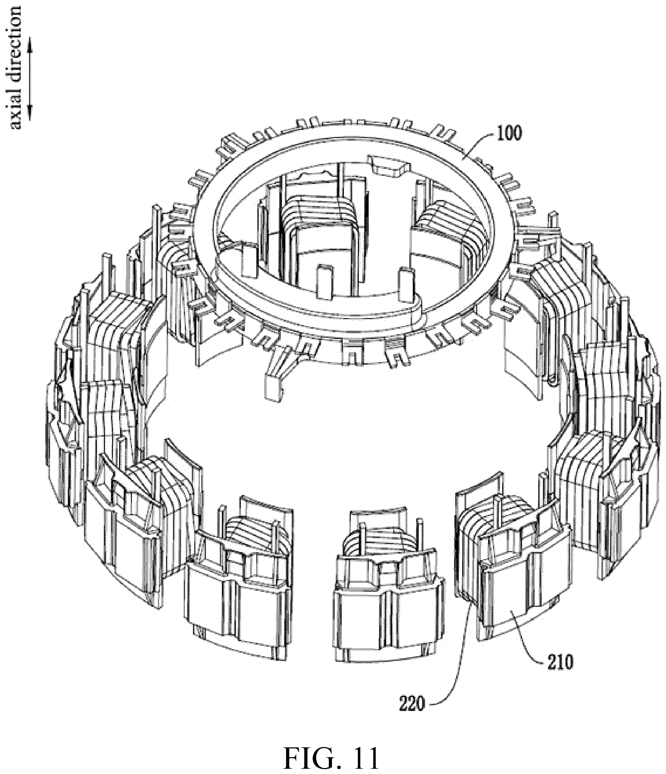

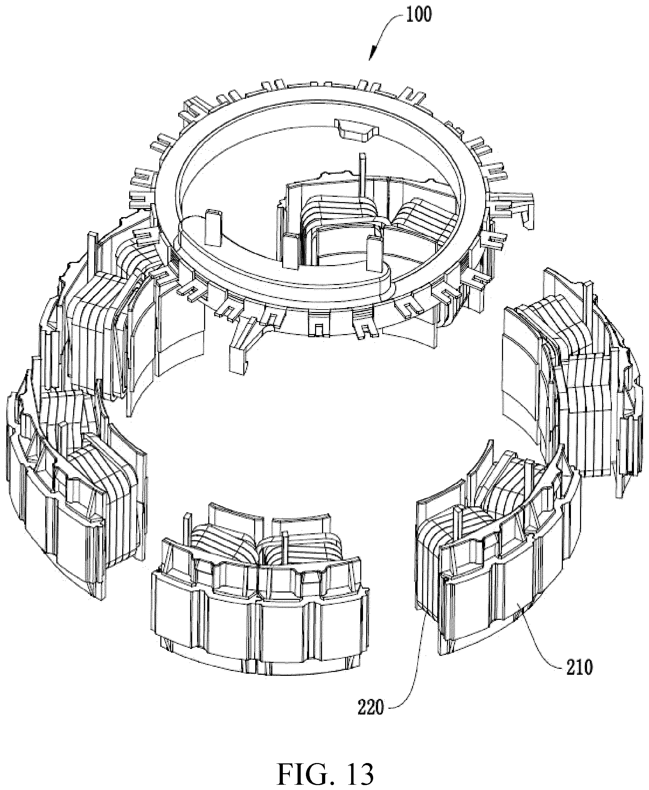

It should be noted that in the above embodiment, referring to FIGs. 11 and 12, when each segmented stator core 210 adopts separate winding, each segmented stator winding 220 has two terminals 221, which will cause the stator assembly 200 to have more terminals 221, so that more connection portions need to be disposed for the busbar assembly 100 to be connected to the terminals 221, which will increase the number of layers of busbars, increase the difficulty of the busbar injection molding process and reduce the injection molding efficiency, thereby increasing the process manufacturing cost of the busbar. To this end, referring to FIGs. 13 and 14, in some embodiments of the present disclosure, at least two segmented stator windings 220 between adjacent slots of the in-phase winding adopt single-wire series windings, so that the two segmented stator windings 220 between the adjacent slots of the in-phase winding have only two terminals 221 in total, thereby greatly reducing the number of terminals 221 of the stator assembly 200, simplifying the structural design of the busbar, reducing the welding quantity of the terminals 221, and effectively improving the manufacturing efficiency, and meanwhile, sufficient operating space is also provided for the welding process, thereby ensuring the feasibility of the welding process.

A 12-slot and 10-pole motor is adopted as an example: if each segmented stator core 210 adopts separate winding, each segmented stator winding 220 has 2 terminals 221. In this way, the stator assembly 200 has a total of 24 terminals 221. However, if 2 segmented stator cores 210 in the in-phase adjacent slots adopt series winding, that is, the 2 segmented stator windings 220 between the in-phase adjacent slots adopt single-wire series windings, then each segmented stator winding 220 has only 1 terminal 221. The stator assembly 200 has only 12 terminals 221 in total. It can be seen that when the two segmented stator windings 220 between the in-phase adjacent slots adopt single-wire series winding, the total quantity of the terminals 221 of the stator assembly 200 can be greatly reduced.

It should be noted that in order to improve the efficiency of the motor, in some embodiments of the present disclosure, the number of poles of the motor is 2p, the number of slots is Z, and the number of poles and the number of slots satisfy the following formula: | Z-2p | =2. When the number of poles and the number of slots of the motor satisfies the above equation, the fundamental winding coefficient of the motor can obtain a higher value, and the low-order harmonic winding coefficients obtain a lower value. Therefore, while increasing the magnetic load of the motor, it is beneficial to reducing the noise and harmonic losses generated by the harmonic magnetic field, improving the efficiency of the motor, and also ensuring that the in-phase windings have adjacent slots, thereby realizing the series winding of a plurality of segmented stator cores 210.

An embodiment of the second aspect of the present disclosure provides a power assembly, which comprises the motor of the embodiment of the first aspect of the present disclosure. Certainly, the power assembly further comprises components such as a transmission mechanism 400 and an electronic control mechanism (not shown in the drawings). The motor outputs torque through the transmission mechanism 400, and the electronic control mechanism is used to control the operation of the motor and the transmission mechanism 400.

Since the power assembly adopts the motor according to the embodiment of the first aspect of the present disclosure, by filling the resin material between the stator assembly and the housing 300, the motor can effectively improve the stiffness of the stator assembly and reduce the vibration noise of the power assembly, and the heat dissipation performance of the motor can also be effectively improved to prevent the reduction of the efficiency of the motor due to excessive temperature, which is beneficial to improving the output efficiency of the power assembly.

An embodiment of the third aspect of the present disclosure provides a power-assisted bicycle, which comprises the power assembly of the embodiment of the second aspect of the present disclosure.

Since the power-assisted bicycle comprises the power assembly of the embodiment of the second aspect of the present disclosure, it, therefore, also has all the beneficial effects of the power assembly of the embodiment of the second aspect of the present disclosure, which will not be described in detail here.

The embodiments of the present disclosure have been described in detail above in conjunction with the accompanying drawings. However, the present disclosure is not limited to the above embodiments. Within the scope of knowledge possessed by those of ordinary skill in the art, various modifications can be made without departing from the purpose of the present disclosure.

## Claims

1. A motor, comprising:
a housing internally formed with a cavity, and provided with a wire passing hole communicated to the cavity;
a stator assembly disposed in the cavity and interference-connected to an inner wall of the housing; and
a busbar assembly disposed in the cavity and mounted at one end of the stator assembly in an axial direction, and provided with a three-phase connection terminal that penetrates through the wire passing hole to be connected to a power supply,
wherein a resin material is filled between the stator assembly and the housing, and the busbar assembly is further provided with a boss base mounted in the wire passing hole in a sealing manner, and the three-phase connection terminal is mounted on the boss base.

2. The motor according to claim 1, wherein the resin material is a thermosetting resin material.

3. The motor according to claim 1, wherein the busbar assembly comprises:
an annular support frame;
a first bus bar provided with a first main body portion embedded in the annular support frame, wherein the first main body portion extends in a circumferential direction of the annular support frame and has a first opening;
a second bus bar provided with a second main body portion embedded in the annular support frame, wherein the second main body portion extends in the circumferential direction of the annular support frame and has a second opening; and
a third bus bar provided with a third main body portion and a fourth main body portion that are embedded in the annular support frame and electrically connected, wherein a clearance is provided between the fourth main body portion and the third main body portion in an axial direction of the annular support frame,
wherein the first main body portion and the second main body portion are spaced apart in the axial direction of the annular support frame, the first opening and the second opening are staggered in the circumferential direction of the annular support frame, the third main body portion is located at the first opening, and the fourth main body portion is located at the second opening.

4. The motor according to claim 3, wherein a height of the clearance in the axial direction of the annular support frame is h, wherein the h satisfies: h is greater than or equal to 0.3 mm.

5. The motor according to claim 3, wherein the third bus bar is further provided with a bending portion, and one end of the bending portion is connected to the third main body portion and the other end of the bending portion is connected to the fourth main body portion.

6. The motor according to claim 5, wherein the bending portion, the third main body portion, and the fourth main body portion are integrally formed.

7. The motor according to claim 1, wherein the stator assembly comprises:
a plurality of segmented stator cores; and segmented stator windings wound respectively around the segmented stator cores.

8. The motor according to claim 7, wherein at least two of the segmented stator windings between adjacent slots of in-phase windings are single-wire series windings.

9. The motor according to claim 7, wherein a cross-section of a winding wire of the segmented stator winding is square or waist-circular.

10. The motor according to any one of claims 1 to 9, wherein a number of poles of the motor is 2p, and a number of slots is Z, wherein the number of poles and the number of slots satisfy: | Z-2p | =2.

11. A power assembly, comprising:
a motor according to any one of claims 1 to 10.

12. A power-assisted bicycle, comprising a power assembly according to claim 11.
